# EUROPEAN PATENT SPECIFICATION

(11) **EP 3 504 952 B1**
(45) Date of publication and mention of the grant of the patent: **22.09.2021**
(21) Application number: 18205732.3
(22) Date of filing: 12.11.2018
(51) Int. Cl.: A01D 34/66, A01D 34/74, A01D 43/063, A01D 69/03, B62D 5/07, F16H 61/4078

(54) **WORK VEHICLE**
NUTZFAHRZEUG
VÉHICULE DE TRAVAIL

(30) Priority: 28.12.2017 JP 2017253512
(43) Date of publication of application: 03.07.2019
(73) Proprietor: Kubota Corporation, Osaka-shi, Osaka 556-8601 (JP)
(72) Inventor: SHIBATA, Takashi, SAKAI-SHI, OSAKA, 5900823 (JP); YAMASHITA, Nobuyuki, SAKAI-SHI, OSAKA, 5900823 (JP); KAWABATA, Hiroshi, SAKAI-SHI, OSAKA, 5900823 (JP)
(74) Representative: Cabinet Beau de Loménie

(56) References cited:
- EP-A1- 2 047 737
- JP-A- H06 323 431
- JP-A- H08 156 622

## Description

### BACKGROUND OF THE INVENTION

### 1. Field of the Invention

The present invention relates to a work vehicle such as a riding grass mower, a tractor, etc., comprising a hydrostatic stepless speed changer device and a power steering device, both incorporated in a traveling driving system for receiving pressure oil from a common (shared) pressure oil feeding pump; and a hydraulic actuator for operating a work implement (simply referred to as "implement" hereinafter) for carrying out a predetermined utility work.

### 2. Description of the Related Art

This type of work vehicle has employed techniques described in the following sections [1] and [2].
[1] The power steering device is connected to a priority circuit (preference cercuit) via a distributor valve from a hydraulic pump. To a surplus circuit, a lifting hydraulic cylinder of a mower device and an operational valve of a power takeoff (PTO) clutch are connected. Discharge oil from the power steering device is supplied to a charge circuit of the hydrostatic stepless speed changer device, and discharge oil from the lifting hydraulic cylinder and the operational valve of the PTO clutch is returned to a tank (see e.g. JP H10131985 A).
   In case of the work vehicle disclosed in JP H10131985 A, since discharge oil from the power steering device is supplied at all time to the charge circuit of the hydrostatic stepless speed changer device, there occurs no shortage of charge oil. However, supplying of pressure oil to the lifting hydraulic cylinder of the mower device and the PTO clutch, which are connected in parallel, is done via the surplus circuit of the distributor valve. Therefore, in order to avoid reduction in the operational speed of the lifting hydraulic cylinder or the PTO clutch even in case of an operation simultaneous with the traveling system, it is necessary to employ a sufficiently large pump capacity. Then, a hydraulic pump having a large discharge/displacement capacity will be needed, thus resulting in inconvenience of inevitable power loss or device enlargement.
[2] In order to allow pressure oil discharged from a charge pump to be supplied via the power steering device to the lifting hydraulic cylinder of the mower device, a neutral port of a control valve of the power steering device and a control valve for the lifting hydraulic cylinder are connected in series. The control valve for the power steering device and the control valve for the lifting hydraulic cylinder are configured such that the pressure oil is supplied to the charge circuit of the hydrostatic stepless speed changer device only when both of these valves are located at the respective neutral positions thereof, whereas the pressure oil is returned to the tank when either one of the control valves is under an in-use state (see e.g. JP H06323431 A).
   In case of the work vehicle disclosed in JP H06323431 A, the power steering device and the lifting hydraulic cylinder of the mower device are connected in series. Thus, in comparison with parallel connection, the hydraulic pump does not need very large discharging/displacement oil capacity, so that it is advantageous in the respect of readiness of avoidance of power loss or device enlargement.
   However, since a portion of the oil supplied from the pressure oil supplying pump is returned to a tank port during a steering drive operation by the power steering device, if the lifting hydraulic cylinder for the mower device is operated during such a steering driving operation, there can occur shortage in amount of oil to be supplied to the charge circuit of the hydrostatic stepless speed changer device. Thus, there remains room for improvement in this respect.
[3] In view of the above, for a work vehicle using a power steering device and a hydraulic actuator for operating an implement in combination, it is desired to avoid shortage in the charge oil amount for the hydrostatic stepless speed changer device, while avoiding power loss or device enlargement.

Document JPH08 156622 A discloses a work vehicle according to the preamble of claim 1.

### SUMMARY OF THE INVENTION

Thus, proposed is a work vehicle as below:
A work vehicle comprising:
   a traveling vehicle body;
   a traveling device having a steerable wheel and a driving whee;
   a hydrostatic stepless speed changer device for driving the driving wheel;
   a power steering device for steering the steerable wheel;
   an implement connected to the traveling vehicle body;
   a hydraulic actuator for operating the implement;
   a pressure oil supplying pump for supplying pressure oil to the power steering device and the hydraulic actuator; and
   a pressure oil supplying/discharging circuit for supplying/discharging pressure oil to/from the pressure oil supplying pump from/to the power steering device and the hydraulic actuator, the pressure oil supplying/discharging circuit including:
      a first oil passage for supplying pressure oil from the pressure oil supplying pump via the power steering device to the hydraulic actuator;
      a second oil passage for connecting a return oil passage from the power steering device to a charge circuit of the hydrostatic stepless speed changer device; and
      a third oil passage for connecting a return oil passage from the hydraulic actuator to the charge circuit.

With this arrangement, of pressure oil supplied from the pressure oil supplying pump to the power steering device, a portion thereof is supplied to the hydraulic actuator of the implement and other portion thereof is returned to the charge circuit of the hydrostatic stepless speed changer device. In addition thereto, return oil from the hydraulic actuator of the implement is also supplied to the charge circuit of the hydrostatic stepless speed changer device.

Therefore, while the arrangement avoids power loss or device enlargement by supplying pressure oil past the power steering device to the hydraulic actuator of the implement, the arrangement can also easily ensure no shortage in the amount of oil to be supplied to the charge circuit of the hydrostatic stepless speed changer device, irrespectively of presence/absence of an operation of the power steering device or presence/absence of an operation of the hydraulic actuator.

According to one preferred embodiment, the implement comprises a mower device; and the hydraulic actuator comprises a hydraulic cylinder for lifting up/down the mower device.

Alternatively or additionally thereto, the implement may comprise a grass collecting device; and the hydraulic actuator comprises a hydraulic cylinder for lifting up/down and changing posture of a grass collecting container of the grass collecting device.

With one of such arrangements, it is possible to obtain a grass mower (an example of a work vehicle) that avoids power loss or device enlargement but that can also easily ensure no shortage in the amount of oil to be supplied to the charge circuit of the hydrostatic stepless speed changer device, irrespectively of presence/absence of an operation of the power steering device or presence/absence of an operation of the hydraulic actuator.

According to another preferred embodiment, a constricted portion (e.g. orifice) is provided at a supplying oil passage portion in the first oil passage between the power steering device and the hydraulic actuator for returning a surplus oil present at the supplying oil passage portion to the third oil passage.

With such a constricted portion at a supplying oil passage portion to the hydraulic actuator, it is possible to return pressure oil to the charge circuit side of the hydrostatic stepless speed changer device in an efficient manner, while avoiding tendency of the hydraulic actuator being operated at a high speed more than necessary in association with a variation in oil amount from the power steering device.

Further and other features and advantages thereof will become apparent upon reading the following description.

### BRIEF DESCRIPTION OF THE DRAWINGS

Fig. 1 is an overall side view of one embodiment embodying a work vehicle as a riding grass mower,
Fig. 2 is an overall plan view of the riding grass mower, and
Fig. 3 is a circuit diagram showing a hydraulic system.

### DETAILED DESCRIPTION OF PREFERRED EMBODIMENTS

In the following description, a riding grass mower is an example of a work vehicle.

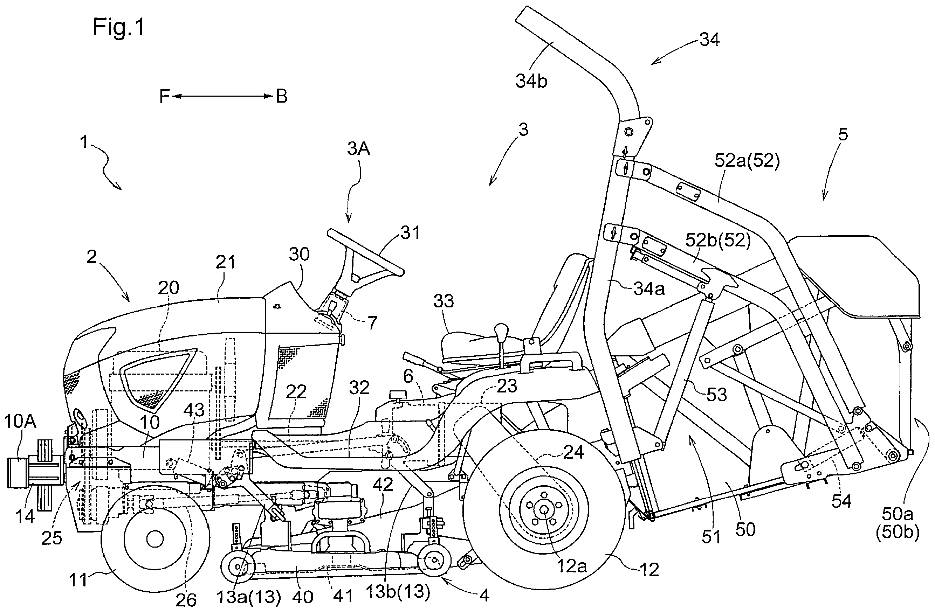

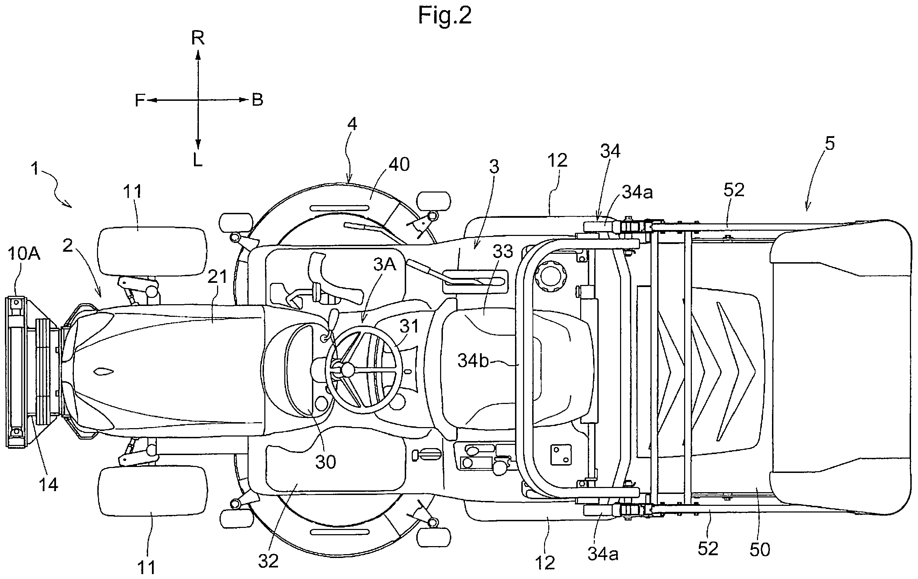

Unless indicated explicitly otherwise, it is understood that in the following discussion, the forward traveling direction of a riding grass mower at time of a work traveling (arrow F in Fig. 1) represents the "front", and the reverse traveling direction (arrow B in Fig. 1) represents the "rear". Further, the right side represents the "right" (arrow R in Fig. 2), and the left side represents the "left" (arrow L in Fig. 2) relative to the "front" and "rear", respectively.

### [General Configuration of Riding Type Grass Mower]

Fig. 1 shows an overall side view of a riding type grass mower as an example of a work vehicle. Fig. 2 shows an overall plan view of the riding grass mower. In the riding type grass mower, on a front side of a machine body frame 10 of a traveling machine body 1, there are provided a pair of right and left steerable front wheels 11, 11 (corresponding to "steerable wheels"); and on a rear side thereof, there are provided a pair of right and left drivable rear wheels 12, 12 (corresponding to "driving wheels"), so that the work vehicle can be self-propelled. Beneath the machine body frame 10 and between the front wheels 11 and the rear wheels 12 in the front/rear direction, a rear discharge type mower device 4 (corresponding to an "implement") is suspended to be liftable up/down. On a rear side of the traveling machine body 1, there is provided a grass collecting device 5 (corresponding to an "implement") for accommodating cut grass clippings cut by the mower device 4.

As shown in Fig. 1 and Fig. 2, on the machine body frame 10 of the traveling machine body 1, an engine section 2 is provided at its front portion, and a riding and driving section 3 is provided on the rear side of the engine section 2.

At the engine section 2, an engine 20 is mounted on the machine body frame 10 as being accommodated within an engine hood 21. Power taken from the rear side of the engine 20 is inputted via a main transmission shaft 22 to a hydrostatic stepless speed changer device 6 disposed at a rear positon; and an output from the hydrostatic stepless speed changer device 6 is transmitted via a transmission case 23 accommodating a gear transmission mechanism 23A to right and left rear axles 12a, which are supported by right and left rear axle cases 24, respectively, for driving the rear wheels 12.

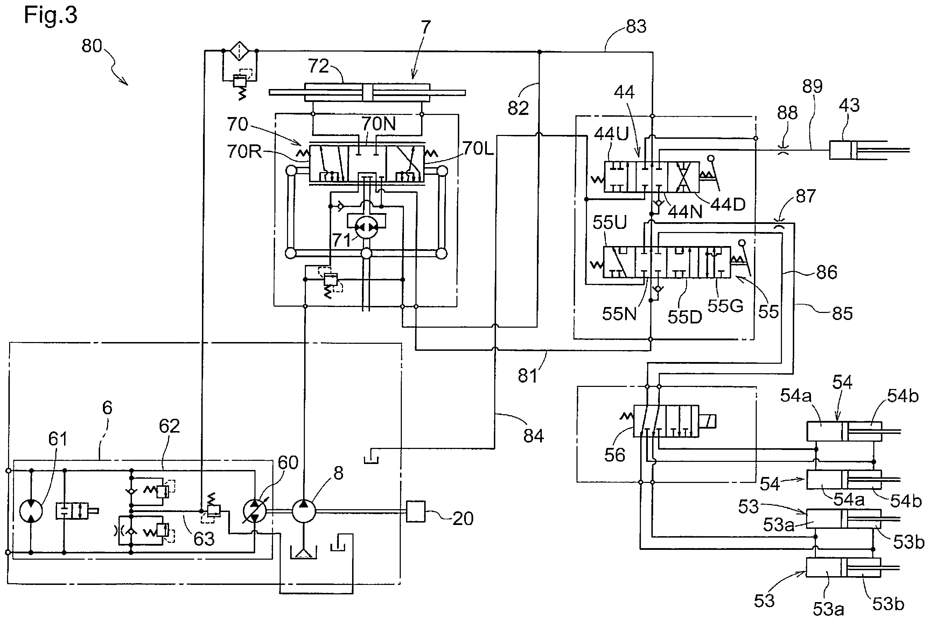

A steering operation of the front wheels 11 is effected by a power steering device 7 (see Fig. 3) which is operable in response to an operation of a steering wheel 31 provided at the riding and driving section 3.

From the front side of the engine 20, power for a work can be taken off. More particularly, on the front side of the engine 20, there is provided a PTO (power takeoff) mechanism 25 in form of a belt transmission mechanism; and via a PTO shaft 26 in the PTO mechanism 25, power of the engine 20 is transmitted to the mower device 4.

At the riding and driving section 3 on the rear side of the engine section 2, there are provided a control panel 30 disposed continuously from a rear side of the engine hood 21; and a maneuvering section 3A including the steering wheel 31. On the rear side of the maneuvering section 3A, there is provided a driver's seat 33 upwardly of an access step 32 which is disposed at the foot portion; and at a rear portion of the driver's seat 33, a ROPS (rollover protection structure) 34 is mounted vertically.

The ROPS 34 has a portal shape as seen in a front view thereof; and, to a pair of right and left ROPS bases (not shown) provided integrally at rear end portions of the machine body frame 10, there are connected and fixed lower sides of pillar-like leg portions 34a, 34a disposed on the right and left opposed sides. Upper end sides of the right and left pillar-like leg portions 34a, 34a are interconnected via a portal-shaped upper frame 34b, thus covering the upper side of the driver's seat 33.

At the front portion of the machine body frame 10, there is provided a guard frame 10A acting as a protective member for the machine body front portion. The guard frame 10A is provided with a balance weight attaching portion 14 to which a plurality of balance weights can be attached.

### [Mower Device]

The mower device 4 includes a housing 40 which is suspended from the machine body frame 10 to be liftable up/down via a link mechanism 13 having right and left pairs of front links 13a and rear links 13b on the right and left opposed sides.

In the link mechanism 13, to upper end portions of the front links 13a, a mower lift cylinder 43 is connected. In association with an expanding/contracting operation of this mower lift cylinder 43, a vertical height position of the housing 40 relative to the machine body frame 10 can be changed.

Inside the housing 40, there are mounted a pair of right and left rotary blades 41, 41. The respective rotary blades 41 are driven to rotate at an equal speed about vertical axes, with rotational paths thereof being partially overlapped with each other, whereby grass or the like will be cut; and also with a conveying wind generated in association with the blade rotational motion, cut grass clippings may be discharged to the rear side via a discharge opening formed at a rear portion of the housing 40.

### [Grass Collecting Device]

As shown in Fig. 1 and Fig. 2, the grass collecting device 5 includes a grass collecting container 50 for accommodating cut grass clippings; and a lift drive mechanism 51 for allowing lifting up/down operations of the grass collecting container 50 relative to the traveling machine body 1, as well as grass discharging operation thereof.

The grass collecting container 50 has, on its front end side, an inlet opening (not shown) for receiving cut grass clippings fed from the mower device 4 side via a conveying duct 42; and has, on its rear end side, a discharging opening 50a for discharging the cut grass clippings, and an opening/closing lid 50b for covering the discharging opening 50a.

The lift drive mechanism 51 includes a lift link 52 which connects the grass collecting container 50 to the ROPS 34 provided on the rear side of the traveling machine body 1; a lift cylinder 53 (corresponding to "hydraulic cylinder") for lifting up/down the lift link 52 relative to the ROPS 34; and a dump cylinder 54 (corresponding to "hydraulic cylinder") for changing the posture of the grass collecting container 50 from a nearly horizontal collecting posture to a rearwardly and downwardly inclined posture so as to open/close the opening/closing lid 50b of the grass collecting container 50.

The lift link 52 includes a pair of right and left upper links 52a and a pair of right and left lower links 52b, with front end sides of the respective upper links 52a and lower links 52b being detachably connected to upper portions of the ROPS 34, and rear sides of the respective upper links 52a and lower links 52b being connected to lower portions of the grass collecting container 50 adjacent its rear end. The upper end portion of the lift cylinder 53 in form of a hydraulic cylinder is connected to the lower link 52b associated therewith, so that in response to an expanding/contracting movement of the lift cylinder 53, the lift link 52 is pivoted to elevate or lower the grass collecting container 50.

The dump cylinder 54 in form of a hydraulic cylinder is disposed downwardly of the rear end side of the grass collecting container 50. One end portion of the dump cylinder 54 is connected to a well-known dump operation mechanism (not shown), such that in response to an expanding/contacting movement of the dump cylinder 54, the grass collecting container 50 can be selectively operated into a discharging posture in which the grass collecting container 50 is turned over to be inclined rearwards, and a collecting posture in which the grass collecting container 50 is disposed nearly horizontal.

Each of the above-described lift cylinder 53 and the dump cylinder 54 is provided in one (right and left) pair, and included in a hydraulic circuit for the grass collecting device 5 to be simultaneously operable on the right and left sides.

### [Pressure Oil Feeding/Discharging Circuit]

The above-described hydrostatic stepless speed changer device 6, the power steering device 7, the lift cylinder 53, the dump cylinder 54 and the mower lift cylinder 43 receive feeding of pressure oil from a pressure oil feeding pump 8 driven by power of the engine 20. Next, a pressure oil feeding/discharging circuit 80 (see Fig. 3) to/from which the pressure oil from the pressure oil feeding pump 8 is fed/discharged will be described.

The hydrostatic stepless speed changer device 6 has a well-known configuration in which a variable displacement type hydraulic pump 60 driven by power of the engine 20 like the pressure oil feeding pump 8, and a variable displacement type hydraulic motor 61 are interconnected via a closed circuit 62. A charge circuit 63 is connected to the closed circuit 62 a for replenishing an amount of pressure oil.

As shown in Fig. 3, pressure oil discharged from the pressure oil feeding pump 8 is fed to a steering control valve 70 of the power steering device 7.

The steering control valve 70 is selectively operable to three positions, namely, a neutral position 70N, a right turning position 70R and a left turning position 70L, in response to an operation on the steering wheel 31. In this, a metering pump 71 sends pressure oil by an amount corresponding to an operational amount of the steering wheel 31 into a steering cylinder 72 of the power steering device 7, thus steering the front wheels 11 by an angle corresponding to the operational amount of the steering wheel 31.

When the steering wheel 31 is operated to the "straight traveling", the steering control valve 70 is located at the neutral position 70N. Under this state, an entire amount of oil fed from the pressure oil feeding pump 8 will flow into a first oil passage 81. The lift cylinder 53, the dump cylinder 54 and the mower lift cylinder 43 are connected to the first oil passage 81 on the downstream side thereof, to thereby allow for pressure oil feeding to the lift cylinder 53, dump cylinder 54 and mower lifting cylinder 43.

When the steering wheel 31 is operated to "right turning" or "left turning", the steering control valve 70 is located at the right turning position 70R or the left turning position 70L.

Under each state, a portion of the oil fed from the pressure oil feeding pump 8 will flow into the first oil passage 81, and another portion thereof will flow into a second oil passage 82. Namely, the oil fed from the pressure oil feeding pump 8 is fed to both the first oil passage 81 and the second oil passage 82; and the pressure oil flown into the second oil passage 82 is fed to the charge circuit 63 of the hydrostatic stepless speed changer device 6.

The first oil passage 81 incorporates a lifting operational valve 55 acting as a control valve for controlling operations of the hydraulic actuator; and on the downstream side thereof, a selection switching valve 56 and a mower lifting operational valve 44 are provided.

The selection switching valve 56 is provided for selectively switching one of the lift cylinder 53 and the dump cylinder 54 as a control target; and is constituted of a manually operable solenoid valve.

The mower lifting operational valve 44 is provided for switching over the mower lift cylinder 43 between a driven elevation state and a self-weight (gravity) lowering state; and the mower lifting operational valve 44 is provided as a three-position switching valve.

The lifting operational valve 55 has a neutral position 55N capable of center-bypassing, an elevating position 55U, a lowering position 55D and a self-weight (gravity) lowering position 55G.

When the selection switching valve 56 selectively connects the lift cylinder 53 and the mower lifting operational valve 44 is located at the neutral position 44N as shown in Fig. 3, flows of pressure oil at the respective operational positions of the above-described lifting operational valve 55 will take place as follows.

At the neutral position 55N of the lifting operational valve 55, the pressure oil flows downstream via a center bypass passage, and flows past a center bypass passage of the mower lifting operational valve 44, and then the oil is fed into a third oil passage 83. As the third oil passage 83 is connected to the charge circuit 63 of the hydrostatic stepless speed changer device 6, the pressure oil fed to the third oil passage 83 will be used as charge oil.

When the lifting operational valve 55 is operated to the elevating position 55U, the pressure oil of the first oil passage 81 flows via a fifth oil passage 85 into an elevation chamber 53a of the lift cylinder 53, whereby the lift cylinder 53 is expanded to elevate the grass collecting container 50. The pressure oil present in a lowering chamber 53b of the lift cylinder 53 returns to the lifting operational valve 55 via a sixth oil passage 86 and then is fed via the center bypass passage to the third oil passage 83.

When the lifting operational valve 55 is operated to the lowering position 55D, the pressure oil of the first oil passage 81 flows via the sixth oil passage 86 to be fed into the lowering chamber 53b of the lift cylinder 53, whereby the lift cylinder 53 is contracted to lower the grass collecting container 50. The pressure oil present in the elevation chamber 53a of the lift cylinder 53 returns to the lifting operational valve 55 via the fifth oil passage 85 and then is fed via the center bypass passage to the third oil passage 83.

When the lift operational valve 55 is operated to the self-weight lowering position 55G, the pressure oil of the first oil passage 81 is fed via the center bypass passage to the third oil passage 83. And, the fifth oil passage 85 and the sixth oil passage 86 are connected to the fourth oil passage 84, so that the pressure oil in the elevation chamber 53a or the lowering chamber 53b of the lift cylinder 53 is now to be returned to the tank.

When the selection switching valve 56 selectively connects the dump cylinder 54 and the mower lifting operational valve 44 is located at the neutral position 44N, flows of pressure oil at the respective operational positions of the above-described lifting operational valve 55 will take place in same way as the above-described case of the connection of the lift cylinder 53, for an elevation chamber 54a and a lowering chamber 54b of the dump cylinder 54.

Referring next to flows of pressure oil at the operational positions of the mower lifting operational valve 44, at the neutral position 44N, the pressure oil of the first oil passage 81 is fed via the center bypass passage to the third oil passage 83. At the elevating position 44U, the pressure oil of the first oil passage 81 is fed via a ninth oil passage 89 to an elevation chamber 43a of the mower lift cylinder 43.

At the lowering position 44D, the pressure oil of the elevation chamber 43a of the mower lift cylinder 43 is returned under the self weight of the mower device 4 to the mower lifting operational valve 44 via the ninth oil passage 89,and then fed to the fourth oil passage 84 to flow into the tank.

In the above, since a mower side constricted portion 88 (e.g. in form of an orifice) is incorporated in the ninth oil passage 89, when the mower lifting operational valve 44 is located at the elevating position 44U, the amount of pressure oil fed to the ninth oil passage 89 will be restricted. Further, after the mower device 4 reaches its maximal position, a surplus amount of pressure oil will be supplied via a relief valve and the second oil passage 82 inside the pressure oil supplying/discharging circuit 80 to the charge circuit 63 of the hydrostatic stepless speed changer device 6.

In the fifth oil passage 85, too, there is provided a grass cutting side constricted portion 87 (e.g. in form of an orifice) for constricting/throttling the passage. With provision of the grass cutting side constricted portion 87, when the amount of oil from the first oil passage 81 is excessive, the amount of oil to be supplied to the lift cylinder 53 or the dump cylinder 54 can be restricted. Whereby, a surplus amount of pressure oil can be readily supplied to the charge circuit 63 of the hydrostatic stepless speed changer device 6.

As described above, the pressure oil fed to the steering control valve 70 of the power steering device 7 is not returned directly to the tank, irrespectively of presence/absence of an operation of the steering cylinder 72. Namely, the pressure oil from the power steering device 7 is fed to the first oil passage 81 which acts as a feeding passage to the hydraulic actuators, i.e. the lift cylinder 53, the dump cylinder 54 and the mower lifting cylinder 43; and fed to the second oil passage 82 which is connected to the charge circuit 63 of the hydrostatic stepless speed changer device 6.

For the pressure oil feeding passage to the lift cylinder 53 and the dump cylinder 54, too, the return oil from the lift cylinder 53 or the dump cylinder 54 is not entirely returned to the tank, but the return oil is fed to the charge circuit 63 of the hydrostatic stepless speed changer device 6 via the third oil passage 83.

### [Other Embodiments]

The arrangements of following other embodiments can be employed as desired.
(1) In the foregoing embodiment, the mower lift cylinder 43 is configured as a single-acting type. The invention is not limited hereto, it is possible to employ a double-acting type cylinder for returning to the charge circuit 63, like the lift cylinder 53 and the dump cylinder 54.
(2) In the foregoing embodiment, the mower side constricted portion 88 and the grass cutting side constricted portion 87 are provided. However, such constricted portion(s) can be omitted.
(3) In the foregoing embodiment, the implement comprises the grass collecting device 5 and the mower device 4. The invention is not limited thereto. As the implement, it is possible to employ various kinds such as a cultivator device, a crane device, a lift fork, a dump platform, a lift conveyer, a water discharger, etc.
(4) In the foregoing embodiment, the work vehicle comprises a riding grass mower. However, the present invention is applicable to other kinds of work vehicles having a power steering device and a hydraulic actuator for operating various kinds of implements, such as a tractor, a transporter vehicle, a fork lift, etc.

## Claims

1. A work vehicle comprising:
a traveling vehicle body (1);
a traveling device having a steerable wheel (11) and a driving wheel (12);
a hydrostatic stepless speed changer device (6) for driving the driving wheel (12);
a power steering device (7) for steering the steerable wheel (11);
an implement (4; 5) connected to the traveling vehicle body (1);
a hydraulic actuator (43; 53, 54) for operating the implement (4; 5); and
a pressure oil supplying pump (8) for supplying pressure oil to the power steering device (7) and the hydraulic actuator (43; 53, 54); wherein
the work vehicle further comprises a pressure oil supplying/discharging circuit (80) for supplying/discharging pressure oil to/from the pressure oil supplying pump (8) from/to the power steering device (7) and the hydraulic actuator (43; 53, 54), the pressure oil supplying/discharging circuit (80) including:
a first oil passage (81) for supplying pressure oil from the pressure oil supplying pump (8) via the power steering device (7) to the hydraulic actuator (43; 53, 54);
a second oil passage (82) for connecting a return oil passage from the power steering device (7) to a charge circuit (63) of the hydrostatic stepless speed changer device (8); **characterized in that** the pressure oil supplying/ discharging circuit (80) further includes
a third oil passage (83) for connecting a return oil passage from the hydraulic actuator (43; 53, 54) to the charge circuit (63).

2. The work vehicle of claim 1, wherein:
the implement comprises a mower device (4); and
the hydraulic actuator comprises a hydraulic cylinder (43) for lifting up/down the mower device (4).

3. The work vehicle of claim 1 or 2, wherein:
the implement comprises a grass collecting device (5); and
the hydraulic actuator comprises a hydraulic cylinder (53, 54) for lifting up/down and changing posture of a grass collecting container (50) of the grass collecting device (5).

4. The work vehicle of any one of claims 1-3, wherein:
a constricted portion (88; 87) is provided at a supplying oil passage portion in the first oil passage (81) between the power steering device (7) and the hydraulic actuator (43; 53, 54) for returning a surplus oil present at the supplying oil passage portion to the third oil passage (83).

5. The work vehicle of any one of claims 1-3, wherein:
a constricted portion (88; 87) is provided at a supplying oil passage portion in the first oil passage (81) between an operational valve (44; 55) of the implement (4; 5) and the hydraulic actuator (43; 53, 54) for returning a surplus oil present at the supplying oil passage portion to the third oil passage (83).

## Patentansprüche

1. Arbeitsfahrzeug, umfassend:
eine fahrende Fahrzeugkarosserie (1),
eine Fahrvorrichtung, die ein lenkbares Rad (11) und ein Antriebsrad (12) aufweist,
eine hydrostatische stufenlose Geschwindigkeitsänderungsvorrichtung (6) zum Antreiben des Antriebsrads (12),
eine Servolenkvorrichtung (7) zum Lenken des lenkbaren Rads (11),
ein mit der fahrenden Fahrzeugkarosserie (1) verbundenes Gerät (4; 5),
einen hydraulischen Aktuator (43; 53, 54) zum Betätigen des Gerätes (4; 5) und
eine Drucköl-Zuführpumpe (8) zum Zuführen von Drucköl an die Servolenkvorrichtung (7) und den hydraulischen Aktuator (43; 53, 54), wobei
das Arbeitsfahrzeug ferner einen Drucköl-Zuführ-/Abführkreis (80) zum Zuführen/Abführen von Drucköl von der/an die Servolenkvorrichtung (7) und von dem/an den hydraulischen Aktor (43; 53, 54) an die/von der Drucköl-Zuführpumpe (8) umfasst, wobei der Drucköl-Zuführ-/Abführkreis (80) beinhaltet:
einen ersten Ölkanal (81) zum Zuführen von Drucköl von der Drucköl-Zuführpumpe (8) über die Servolenkvorrichtung (7) an den hydraulischen Aktuator (43; 53, 54),
einen zweiten Ölkanal (82) zum Verbinden eines Rücklaufölkanals von der Servolenkvorrichtung (7) mit einem Ladekreis (63) der hydrostatischen stufenlosen Geschwindigkeitsänderungsvorrichtung (8),
**dadurch gekennzeichnet, dass** der Drucköl-Zuführ-/Abführkreis (80) ferner beinhaltet:
einen dritten Ölkanal (83) zum Verbinden eines Rücklaufölkanals von dem hydraulischen Aktuator (43; 53, 54) mit dem Ladekreis (63).

2. Arbeitsfahrzeug nach Anspruch 1, wobei:
das Gerät eine Mähvorrichtung (4) umfasst und
der hydraulische Aktuator einen hydraulischen Zylinder (43) zum Anheben/Absenken der Mähvorrichtung (4) umfasst.

3. Arbeitsfahrzeug nach Anspruch 1 oder 2, wobei:
das Gerät eine Grassammelvorrichtung (5) umfasst und
der hydraulische Aktuator einen hydraulischen Zylinder (53, 54) zum Anheben/Absenken und Ändern der Position eines Grassammelbehälters (50) der Grassammelvorrichtung (5) umfasst.

4. Arbeitsfahrzeug nach einem der Ansprüche 1 bis 3, wobei:
eine verengte Sektion (88; 87) an einer Zufuhrölkanalsektion in dem ersten Ölkanal (81) zwischen der Servolenkvorrichtung (7) und dem hydraulischen Aktuator (43; 53, 54) zum Zurückführen eines überschüssigen Öls, das an der Zuführölkanalsektion vorhanden ist, an den dritten Ölkanal (83) vorgesehen ist.

5. Arbeitsfahrzeug nach einem der Ansprüche 1 bis 3, wobei:
eine verengte Sektion (88; 87) an einer Zufuhrölkanalsektion in dem ersten Ölkanal (81) zwischen einem Betätigungsventil (44; 55) des Gerätes (4;5) und dem hydraulischen Aktuator (43; 53, 54) zum Zurückführen eines überschüssigen Öls, das an der Zuführölkanalsektion vorhanden ist, an den dritten Ölkanal (83) vorgesehen ist.

## Revendications

1. Véhicule de travail comprenant :
un corps de véhicule mobile (1) ;
un dispositif mobile ayant une roue orientable (11) et une roue motrice (12) ;
un dispositif de changement de vitesse hydrostatique à variation continue (6) pour entraîner la roue motrice (12) ;
un dispositif de direction assistée (7) pour diriger la roue orientable (11) ;
un accessoire (4 ; 5) raccordé au corps de véhicule mobile (1) ;
un actionneur hydraulique (43 ; 53, 54) pour actionner l'accessoire (4 ; 5) ; et
une pompe d'alimentation en huile de lubrification (8) pour fournir l'huile de lubrification au dispositif de direction assistée (7) et à l'actionneur hydraulique (43 ; 53, 54) ;
dans lequel :
le véhicule de travail comprend en outre un circuit d'alimentation/décharge d'huile de lubrification (80) pour fournir/décharger l'huile de lubrification à/de la pompe d'alimentation en huile de lubrification (8) du/au dispositif de direction assistée (7) et à l'actionneur hydraulique (43 ; 53, 54), le circuit d'alimentation/décharge d'huile de lubrification (80) comprenant :
un premier passage d'huile (81) pour fournir l'huile de lubrification de la pompe d'alimentation en huile de lubrification (8) via le dispositif de direction assistée (7), à l'actionneur hydraulique (43 ; 53, 54) ;
un deuxième passage d'huile (82) pour raccorder un passage d'huile de retour du dispositif de direction assistée (7) à un circuit de charge (63) du dispositif de changement de vitesse hydrostatique à variation continue (8) ; **caractérisé en ce que** le circuit d'alimentation/décharge d'huile de lubrification (80) comprend en outre :
un troisième passage d'huile (83) pour raccorder un passage d'huile de retour de l'actionneur hydraulique (43 ; 53, 54) au circuit de charge (63).

2. Véhicule de travail selon la revendication 1, dans lequel :
l'accessoire comprend un dispositif de fauchage (4) ; et
l'actionneur hydraulique comprend un cylindre hydraulique (43) pour lever/abaisser le dispositif de fauchage (4).

3. Véhicule de travail selon la revendication 1 ou 2, dans lequel :
l'accessoire comprend un dispositif de collecte d'herbe (5) ; et
l'actionneur hydraulique comprend un cylindre hydraulique (53, 54) pour lever/abaisser et changer la posture d'un récipient de collecte d'herbe (50) du dispositif de collecte d'herbe (5).

4. Véhicule de travail selon l'une quelconque des revendications 1 à 3, dans lequel :
une partie rétrécie (88 ; 87) est prévue au niveau d'une partie de passage d'huile d'alimentation dans le premier passage d'huile (81) entre le dispositif de direction assistée (7) et l'actionneur hydraulique (43 ; 53, 54) pour ramener un surplus d'huile présent au niveau de la partie de passage d'huile d'alimentation, au troisième passage d'huile (83).

5. Véhicule de travail selon l'une quelconque des revendications 1 à 3, dans lequel :
une partie rétrécie (88 ; 87) est prévue au niveau d'une partie de passage d'huile d'alimentation dans le premier passage d'huile (81) entre une valve opérationnelle (44; 55) de l'accessoire (4; 5) et l'actionneur hydraulique (43; 53, 54) pour ramener un surplus d'huile présent au niveau de la partie de passage d'huile d'alimentation, au troisième passage d'huile (83).
